# EUROPÄISCHE PATENTANMELDUNG

(11) **EP 3 199 296 A1**
(43) Veröffentlichungstag der Anmeldung: **02.08.2017**
(21) Anmeldenummer: 16153053.0
(22) Anmeldetag: 28.01.2016
(51) Int. Cl.: B23Q 11/10, B23H 9/00

(54) **KÜHLSCHMIERSTOFFSYSTEM FÜR WERKZEUGMASCHINEN**

(71) Anmelder: Brinkmann Pumpen K.H. Brinkmann GmbH & Co. KG, 58791 Werdohl (DE)
(72) Erfinder: Helpertz, Markus, Dr. Ing., 44225 Dortmund (DE); Radermacher, Matthias, 42499 Hückeswagen (DE)
(74) Vertreter: Ter Meer Steinmeister & Partner

(57) **Zusammenfassung**

Kühlschmierstoffsystem für Werkzeugmaschinen, mit einer Pumpe (30) zum Fördern von flüssigem Kühlschmierstoff in eine Leitung (22), die zu mindestens einer auf eine Bearbeitungszone (14) eines Werkstücks (10) und eines Werkzeugs (12) gerichteten Düse (16) führt, dadurch gekennzeichnet, dass die Düse (16) ein das Ende der Leitung (22) abschließender Stopfen (20) aus elektrisch leitfähigem Material ist, der mindestens einen erodierten Düsenkanal (24) bildet.

## Beschreibung

Die Erfindung betrifft ein Kühlschmierstoffsystem für Werkzeugmaschinen, mit einer Pumpe zum Fördern vom flüssigem Kühlschmierstoff in eine Leitung, die zu mindestens einer auf eine Bearbeitungszone eines Werkstücks und eines Werkzeugs gerichteten Düse führt.

Bei Werkzeugmaschinen wird mit Hilfe eines solchen Kühlschmierstoffsystems ein Strahl einer Kühlschmierstoffemulsion auf die durch das Werkstück und das Werkzeug gebildete Bearbeitungszone gerichtet, um die bei der Bearbeitung entstehende Reibungswärme abzuführen und zugleich für eine ausreichende Schmierung zu sorgen. Um eine hohe Kühl- und Schmierwirkung zu erreichen, sollte der Strahl eine laminare Strömung aufweisen.

Bisher wird die Düse zumeist durch das offene oder ggf. auch flach gedrückte Ende eines Rohres gebildet, das die Kühlschmierstoffleitung bildet.

Aufgabe der Erfindung ist es, ein Kühlschmierstoffsystem zu schaffen, das bei gegebenem Energieverbrauch eine verbesserte Kühl- und Schmierleistung aufweist.

Diese Aufgabe wird erfindungsgemäß dadurch gelöst, dass die Düse ein das Ende der Leitung abschließender Stopfen aus elektrisch leitfähigem Material ist, der mindestens einen erodierten Düsenkanal bildet.

Die Herstellung des Düsenkanals durch Elektroerosion ermöglicht es, das Profil des Düsenkanals flexibel an die gewünschte Geometrie der Bearbeitungszone anzupassen, so dass der Kühlschmierstoff genau dort auf das Werkzeug und/oder das Werkzeug trifft, wo er benötigt wird. Durch Erosion lässt sich darüber hinaus ein im wesentlichen gratfreier Düsenkanal mit glatten Wänden herstellen, der bei einer gegebenen Querschnittsform einen geringen Strömungswiderstand hat und die Erzeugung einer gewünschten laminaren Strömung bei hohem Flüssigkeitsdurchsatz ermöglicht.

In einer vorteilhaften Ausführungsform ist am stromaufwärtigen Ende des Düsenkanals eine ebenfalls durch Erosion hergestellte Einlaufzone gebildet, in der sich der Strömungsquerschnitt stetig vom Querschnitt der Leitung auf den Querschnitt des Düsenkanals verjüngt, wodurch der Strömungswiderstand weiter verringert und die Erzeugung von Turbulenzen unterdrückt wird.

Im folgenden wird ein Ausführungsbeispiel anhand der Zeichnung näher erläutert.

Es zeigen:
- Fig. 1: eine schematische Darstellung eines erfindungsgemäßen Kühlschmierstoffsystems an einer Werkzeugmaschine;
- Fig. 2: einen Schnitt durch eine Düse längs der Linie II-II in Fig. 1; und
- Fig. 3 bis 5: Skizzen zur Illustration eines Erosionsverfahrens zur Herstellung der Düse.

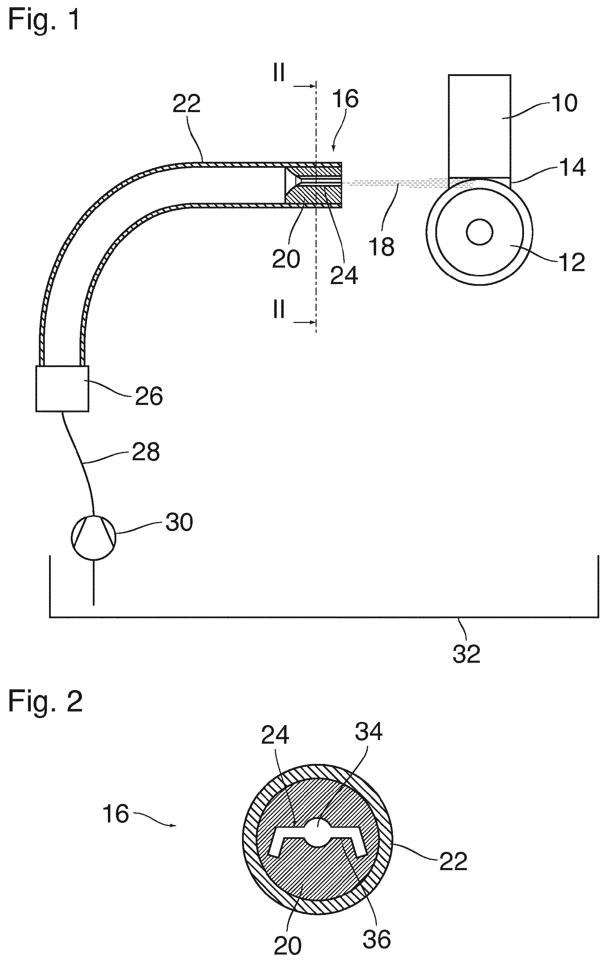

In Fig. 1 sind ein Werkstück 10 und ein Werkzeug 12 einer Werkzeugmaschine gezeigt. Bei dem Werkzeug 12 handelt es sich im gezeigten Beispiel um einen Fräskopf, mit dem das Werkstück 10 in einer Bearbeitungszone 14 bearbeitet wird.

Eine auf die Bearbeitungszone 14 gerichtete Düse 16 erzeugt einen Strahl 18 eines flüssigen Kühlschmierstoffs, mit dem das Werkstück 10 und das Werkzeug 12 in der Bearbeitungszone 14 gekühlt und geschmiert werden. Die Düse 16 wird im wesentlichen durch einen Stopfen 20 aus elektrisch leitfähigem Material, beispielsweise aus Metall gebildet, der dicht in ein Ende einer Leitung 20 eingepasst ist und einen durchgehenden Düsenkanal 24 aufweist.

Die Leitung 22 wird im gezeigten Beispiel durch ein gebogenes Metallrohr gebildet, das mit einer Kupplung 26 an eine Speiseleitung 28 angekuppelt ist, die ihrerseits an den Ausgang einer Pumpe 30 angeschlossen ist. Mit der Pumpe 30 wird die Kühlschmierstoffemulsion aus einem Sumpf 32 angesaugt und unter geeignetem Druck in die Leitung 22 gefördert. Die von dem Werkstück und dem Werkzeug herabtropfende Kühlschmierstoffemulsion wird aufgefangen und in den Sumpf 32 zurückgeleitet, so dass ein geschlossener Kühlmittelkreislauf gebildet wird.

Die Düse 16 ist in Fig. 2 im Querschnitt dargestellt. Der Stopfen 20 ist fest im Ende der Leitung 22 gehalten, beispielsweise durch Schweißen oder Kleben oder dadurch, dass das die Leitung 22 bildende Rohr thermisch auf den Stopfen aufgeschrumpft wird. Alternativ kann der Stopfen auch mit Hilfe eines Schraubgewindes oder einer Überwurf-Verschraubung lösbar befestigt sein. Der Düsenkanal 24 wird durch Elektroerosion hergestellt und weist ein Startloch 34 auf, das nicht notwendigerweise mittig in dem Stopfen 20 sitzen muss und von dem ein Düsenspalt 36 ausgeht, dessen Querschnittsform vorzugsweise an die Form der Bearbeitungszone 14 angepasst ist.

Die Kupplung 26 erlaubt ein einfaches Auswechseln der Düse 16, wenn sich die Form der Bearbeitungszone ändert.

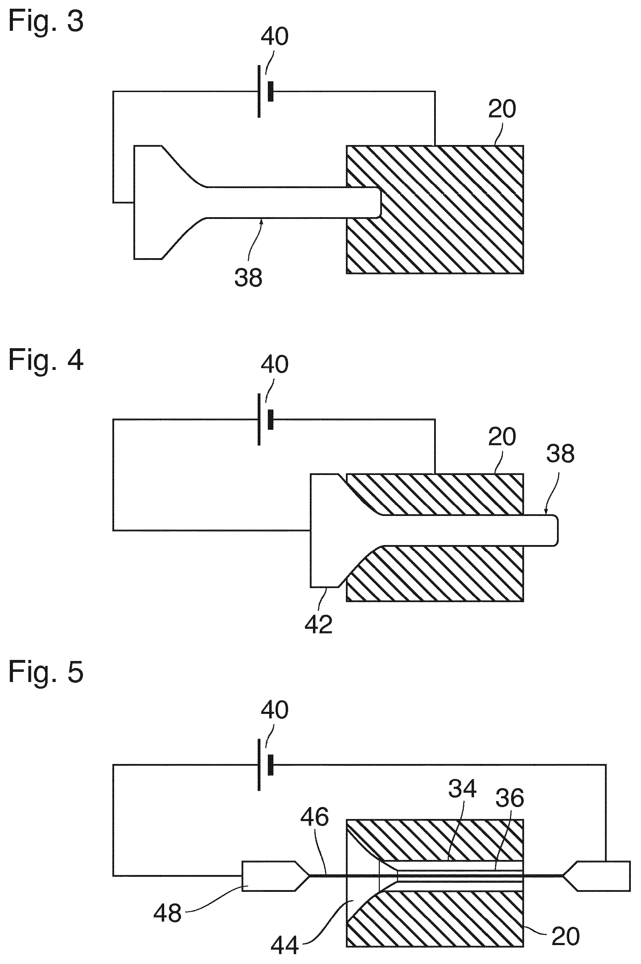

Das Erosionsverfahren zur Herstellung des Düsenkanals 24 ist schematisch in Fig. 3 bis 5 dargestellt. In Fig. 3 sind der Stopfen 20 und eine stiftförmige Elektrode 38 dargestellt, die an die entgegengesetzten Pole einer Gleichspannungsquelle 40 angeschlossen sind. Die Elektrode 38 wird mit ihrem stiftförmigen Teil voraus axial in den Stopfen 20 eingeführt, um das Startloch 34 zu erodieren.

In Fig. 4 ist das Startloch 34 fertiggestellt, und ein erweiterter Basisteil 42 der Elektrode 38 hat im stromaufwärtigen Ende des Stopfens 20 eine Einlaufzone 44 (Fig. 5) geschaffen, die sich trompetenförmig zum stromaufwärtigen Ende des Stopfens hin erweitert.

Der Düsenspalt 36 wird dann im Drahterosionsverfahren hergestellt, wie in Fg. 5 gezeigt ist. Dazu wird ein Draht 46 durch das Startloch 34 hindurchgefädelt und an die Spannungsquelle 40 angeschlossen, und mit Spannwerkzeugen 48, die den Draht 46 halten, wird die gewünschte Kontur des Düsenspaltes 36 abgefahren.

## Patentansprüche

1. Kühlschmierstoffsystem für Werkzeugmaschinen, mit einer Pumpe (30) zum Fördern von flüssigem Kühlschmierstoff in eine Leitung (22), die zu mindestens einer auf eine Bearbeitungszone (14) eines Werkstücks (10) und eines Werkzeugs (12) gerichteten Düse (16) führt, **dadurch gekennzeichnet, dass** die Düse (16) ein das Ende der Leitung (22) abschließender Stopfen (20) aus elektrisch leitfähigem Material ist, der mindestens einen erodierten Düsenkanal (24) bildet.

2. Kühlschmierstoffsystem nach Anspruch 1, bei dem die Querschnittsform des Düsenkanals (24) geometrisch an die Form der Bearbeitungszone (14) angepasst ist.

3. Kühlschmierstoffsystem nach Anspruch 1 oder 2, bei dem der Stopfen (20) am stromaufwärtigen Ende eine Einlaufzone (44) aufweist, die sich zu dem Düsenkanal (24) hin verjüngt.
